# EUROPÄISCHE PATENTSCHRIFT

(11) **EP 3 734 148 B1**
(45) Veröffentlichungstag und Bekanntmachung des Hinweises auf die Patenterteilung: **23.04.2025**
(21) Anmeldenummer: 20172559.5
(22) Anmeldetag: 30.04.2020
(51) Int. Cl.: F21V 8/00, G09F 13/22, G09F 13/04, G09F 19/22

(54) **SICHERHEITS- ODER RETTUNGSZEICHENLEUCHTE**
SAFETY OR RESCUE SIGN LAMP
LUMINAIRE DE SÉCURITÉ OU DE SIGNALISATION

(30) Priorität: 02.05.2019 AT 601152019; 13.03.2020 AT 502192020
(43) Veröffentlichungstag der Anmeldung: 04.11.2020
(73) Patentinhaber: din-Dietmar Nocker Facilitymanagement GmbH & Co KG, 4030 Linz (AT)
(72) Erfinder:
(74) Vertreter: Jell, Friedrich

(56) Entgegenhaltungen:
- EP-A2- 2 650 865
- CN-A- 101 392 895
- CN-U- 208 457 880
- JP-A- 2008 078 010
- KR-B1- 101 657 968
- US-A1- 2008 084 710
- US-A1- 2014 293 185
- US-B1- 6 305 109

## Beschreibung

Die Erfindung betrifft eine Sicherheits- oder Rettungszeichenleuchte, insbesondere für eine Notbeleuchtungsanlage, mit einer Anzeige, mit mindestens einem ersten Leuchtmittel, insbesondere mit mindestens einem LED, mit einer mit dem ersten Leuchtmittel optisch verbundenen, lichtleitenden Platte zum Hinterleuchten der Anzeige und mit einem Außenrahmen, der mit mindestens einer Schmalseite der lichtleitenden Platte verbunden ist.

Aus der DE202009001048U1 ist einer Sicherheits- oder Rettungszeichenleuchte bekannt, deren lichtleitende Platte zum Hinterleuchten der Anzeige der Leuchte zwischen zwei Rahmenbauteilen eines umlaufenden Außenrahmens eingespannt ist. Zudem ist der Außenrahmen dazu ausgebildet, auf einer Längsseite Leuchtmittel, die mit der lichtleitenden Platte optisch verbunden sind, und auf der gegenüberliegenden Längsseite Montageeinrichtungen zur Befestigung der Leuchte zu tragen. Dem Außenrahmen kommt daher eine stabilitätsgebende Funktion an der Leuchte zu, was einer mechanisch steifen Auslegung des Außenrahmens bedarf, Standfestigkeit an der Leuchte zu garantieren. Dies zu erfüllen verhindert eine schlanke Ausbildung des Außenrahmens, was aufgrund genormt großer Anzeigefläche zu vergleichsweise großen Außenabmessungen an der Sicherheits- oder Rettungszeichenleuchten führt. Die KR 101 657 968 B1 offenbart eine im Boden zu installierende Sicherheitsleuchte mit einem Außenrahmen in dem Elektronik, Anzeige, Lichtleitplatte und Leuchtelement wasserdicht gelagert sind.

Die Erfindung hat sich daher die Aufgabe gestellt, eine Sicherheits- oder Rettungszeichenleuchte zu schaffen, die bei hoher Standfestigkeit kleinsten Außenabmessungen genügen kann.

Die Erfindung löst die gestellte Aufgabe durch die Merkmale des Anspruchs 1.

Sind der Außenrahmen und lichtleitenden Platte über mindestens eine Schnappverbindung miteinander verbunden, können durch diesen mechanischen Verbund die konstruktiven Anforderungen an die mechanische Belastbarkeit des Außenrahmens vermindert werden. Über diese Schnappverbindung kann nämlich die lichtleitende Platte als Träger der Leuchte miteinbezogen und damit trotz schlanker Ausführungen am Außenrahmen auch jene von anderen massiven Leuchten bekannte Standfestigkeit garantiert werden. Dies umso mehr dadurch, dass der Außenrahmen ein elastisches Federelement und die lichtleitende Platte an der Schmalseite einen das Federelement aufnehmbaren starren Hinterschnitt ausbildet. Federelement und Hinterschnitt wirken zusammen, diese Schnappverbindung auszubilden. Durch den starren Hinterschnitt an der Platte kann nämlich diese vergleichsweise mechanisch steif ausgelegt werden, was die Verwindungssteifigkeit der Leuchte erhöht und daher selbst bei vergleichsweise großen Anzeigen eine hohe Stabilität garantiert.

Der Aufwand zur Ausbildung eines Hinterschnitts an der lichtleitenden Platte kann reduziert werden, wenn der Hinterschnitt von einer Aussparung in der lichtleitenden Platte ausbildet wird, welche Aussparung von einer ersten Breitseite der lichtleitende Platte zur gegenüberliegenden zweiten Breitseite der lichtleitenden Platte verläuft. Zudem kann solch eine, die Platte durchdringende Aussparung Maßtoleranzen am Federelement aufnehmen, was die Verbindung zwischen Außenrahmen und Platte verbessert.

Vorzugweise weist das Federelement im Querschnitt eine Schwalbenschwanzform oder Pilzform auf, um auf Maßtoleranzen an der Schnappverbindung ausgleichend einwirken zu können. Zudem kann diese Form eine mechanisch belastbare Verbindung zwischen Außenrahmen und Platte garantieren.

Hohe Formgenauigkeit an der Sicherheits- oder Rettungszeichenleuchte kann garantiert werden, wenn der Außenrahmen mehrere Zentriervorsprünge aufweist, zwischen denen die lichtleitende Platte einragt.

Zudem können die Zentriervorsprünge ein seitliches Ausschieben des elastischen Federelements aus dem Hinterschnitt und damit ein Öffnen der Schnappverbindung verhindern, in dem die Zentriervorsprünge die seitliche Beweglichkeit der lichtleitenden Platte begrenzen, insbesondere blockieren.

Vorzugsweise ist das erste Leuchtmittel mit einer ersten Schmalseite der lichtleitenden Platte optisch verbunden, um eventuell störende Einflüsse der Schnappverbindungen auf die optische Verbindung zu vermeiden.

Der beispielsweise ansonsten mit der Platte verschnappte Außenrahmen kann gesichert werden, wenn die erste Schmalseite der lichtleitenden Platte mit dem Außenrahmen über eine Querstiftverbindung verbunden ist. Zudem ermöglicht eine Querstiftverbindung einen, vergleichsweise handhabungsfreundlichen Zusammenbau der Sicherheits- oder Rettungszeichenleuchte, was die Herstellungskosten weiter vermindern kann.

Die Standfestigkeit der formschlüssigen Verbindung kann weiter verbessert werden, wenn ein, insbesondere L-förmiger, Stift durch Presssitz in der Querstiftverbindung arretiert ist.

Hohe mechanische Stabilität an der Sicherheits- oder Rettungszeichenleuchte kann erreicht werden, wenn der Außenrahmen die lichtleitende Platte an den Schmalseiten umfasst.

Diese mechanische Stabilität kann weiter erhöht werden, wenn Schnappverbindungen die zweite, dritte und vierte Schmalseite der lichtleitenden Platte mit dem Außenrahmen verbinden.

Die Sicherheits- oder Rettungszeichenleuchte kann zudem zur, insbesondere variable einstellbaren, Beleuchtung der Umgebung, vorzugsweise auch des Bodens, verwendet werden. Hierzu weist die Sicherheits- oder Rettungszeichenleuchte einen Linsenkörper mit mehreren ersten optischen Linsen, mindestens ein zweites Leuchtmittel, insbesondere mindestens eine LED, das mit dem Linsenkörper optisch verbunden ist, und eine Linearführung auf, wobei der Außenrahmen den Linsenkörper trägt und die Linearführung das zweite Leuchtmittel gegenüber dem Linsenkörper beweglich lagert. Aufgrund dieser beweglichen Lagerung ist es sohin möglich, je nach Bedarf jene Linse mit dem Leuchtmittel optisch zu koppeln, das der geforderten Beleuchtung entspricht. Diese Beleuchtung kann selbst bei montierter Sicherheits- oder Rettungszeichenleuchte verändert werden, was deren Handhabung erheblich vereinfacht.

Vorzugsweise ist die Linearführung am Außenrahmen befestigt, um mit einem geringen Spiel das Leuchtmittel an die optische Linse optisch anbinden zu können.

Zudem kann die lichtleitende Platte eine zweite optische Linse aufweisen, welche Linse mit der dritten Stirnseite der lichtleitenden Platte optisch zum Auskoppeln von Licht verbunden ist, um die Umgebung zusätzlich ausleuchten zu können.

Vorzugsweise weist die zweite optische Linse im Querschnitt einen w-förmigen Konturverlauf auf, um eine begrenzte Ausleuchtung sicherstellen zu können.

Vorzugsweise weist die Sicherheits- oder Rettungszeichenleuchte mindestens einen Montagehalter auf, der am Außenrahmen befestigt ist, was die Montage der Sicherheits- oder Rettungszeichenleuchte weiter erleichtern kann.

Der Montagehalter ist am Außenrahmen im Bereich der ersten Schmalseite der lichtleitenden Platte angeordnet, was unter Zusammenwirken mit der ebenso dort vorgesehenen Querstiftverbindung eine hohe mechanische Stabilität bei der Sicherheits- oder Rettungszeichenleuchte schafft.

Zwei Montagehalter je in einem Eckbereich des Außenrahmens vorgesehen, können die Montage weiter erleichtern, aber auch vergleichsweise hohe Belastungen aufnehmen.

Ist die lichtleitende Platte in den beiden Eckbereichen ausgenommen, kann dies Platz für unterschiedlich ausgebildete Montagehalter schaffen. Hierzu bilden sich zwischen Außenrahmen und lichtleitender Platte Aufnahmen für Befestigungselemente der Montagehalter aus. Ausgehend von dem Montagehalter verjüngen sich diese Ausnehmungen vorzugsweise.

Vorzugsweise eignet sich die Sicherheits- oder Rettungszeichenleuchte für eine Notbeleuchtungsanlage.

In den Figuren ist beispielsweise der Erfindungsgegenstand anhand eines Ausführungsbeispiels näher dargestellt. Es zeigen
- Fig. 1: eine Seitenansicht auf eine Sicherheits- oder Rettungszeichenleuchte,
- Fig. 2: eine Schnittansicht nach II-II auf die nach Fig. 1 dargestellte Sicherheits- oder Rettungszeichenleuchte,
- Fig. 3: eine Detailansicht auf eine Schnappverbindung der nach Fig. 1 dargestellten Sicherheits- oder Rettungszeichenleuchte,
- Fig. 4: eine Detailansicht auf Zentriervorsprünge der nach Fig. 1 dargestellten Sicherheits- oder Rettungszeichenleuchte,
- Fig. 5: eine Detailansicht auf eine Querstiftverbindung der nach Fig. 1 dargestellten Sicherheits- oder Rettungszeichenleuchte,
- Fig. 6a: eine Schnittansicht nach VI-VI der Fig. 1 zu einem Linsenkörper,
- Fig. 6b: eine Draufsicht auf den nach Fig. 6a dargestellten Linsenkörper und
- Fig. 7: eine Schnittansicht nach VII-VII der Fig. 1 zu einer zweiten optischen Linse.

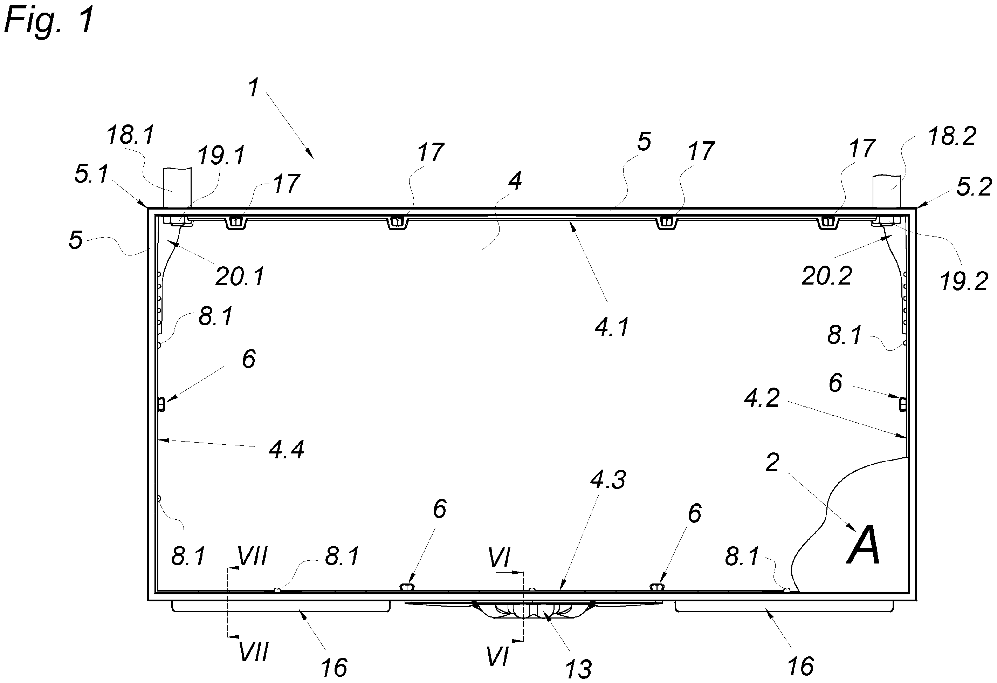

Nach Fig. 1 wird beispielsweise eine Sicherheits- oder Rettungszeichenleuchte 1 dargestellt, die bei nicht näher dargestellten Notbeleuchtungsanlage Verwendung findet.

Diese Sicherheits- oder Rettungszeichenleuchte 1 weist eine hinterleuchtete Anzeige 2 auf, in der die anzuzeigende Information entweder fix oder variable ausgebildet sein kann.

Zum Hinterleuchten der Anzeige weist die Sicherheits- oder Rettungszeichenleuchte 1 ein erstes Leuchtmittel 3, nämlich mehrere nacheinander angeordnete erste LEDs, und eine lichtleitende Platte 4 auf.

Das erste Leuchtmittel 3 ist mit einer ersten Schmalseite 4.1 der lichtleitenden Platte 4 optisch verbunden.

Die Sicherheits- oder Rettungszeichenleuchte 1 wird zudem von einem Außenrahmen 5 umfasst, der mit der lichtleitenden Platte 4 verbunden ist.

Wie in Fig. 1 zu erkennen, ist die Anzeige 2 vergleichsweise großflächig ausgebildet. Dies unter anderem deshalb, weil im Gegensatz zum Stand der Technik der Außenrahmen 5 besonders schlank ausgeführt ist.

Ermöglicht wird dies durch die Verwendung der lichtleitenden Platte 4 als Träger der Sicherheits- oder Rettungszeichenleuchte 1. Hierzu sind der Außenrahmen 5 und lichtleitende Platte 4 über mindestens eine Schnappverbindung 6 miteinander und damit direkt verbunden, wofür der Außenrahmen 5 ein elastisches Federelement 6.1 und die lichtleitende Platte 4 an der Schmalseite 4.2, 4.3, 4.4 einen das Federelement 6.1 aufnehmbaren starren Hinterschnitt 6.2 ausbildet. Das elastische Federelement 6.1 und der starre Hinterschnitt 6.2 wirken zusammen, diese Schnappverbindung 6 auszubilden. Beispielsweise kann das Federelement 6.1 in den Hinterschnitt 6.2 eingeschnappt oder eingeschoben werden. Dies schafft einen standfesten direkten Verbund zwischen Außenrahmen 5 und lichtleitender Platte 4, was die Konstruktionsanforderungen an den Außenrahmen 5 erleichtert, der dadurch schmaler und materialsparender ausgeführt werden kann. Zudem führt dieser besondere Außenrahmen 5 zu einer kompakten Sicherheits- oder Rettungszeichenleuchte 1.

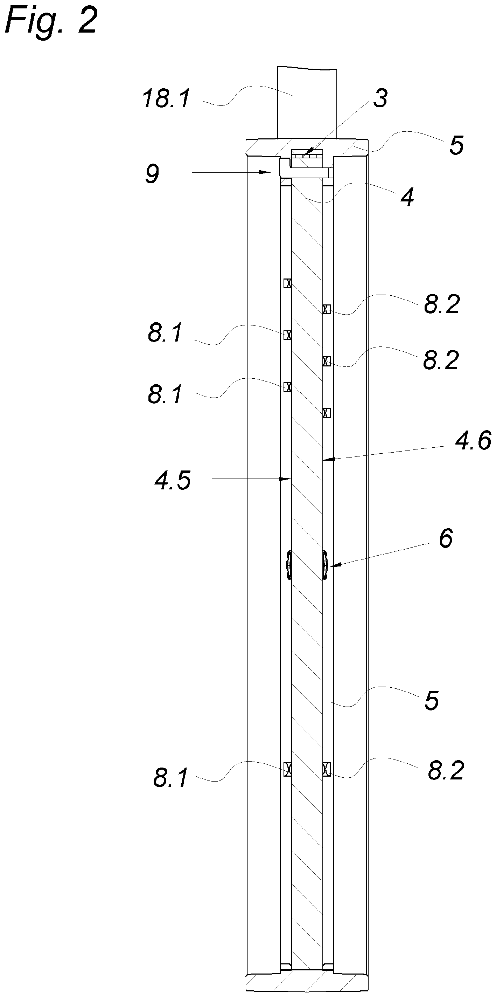

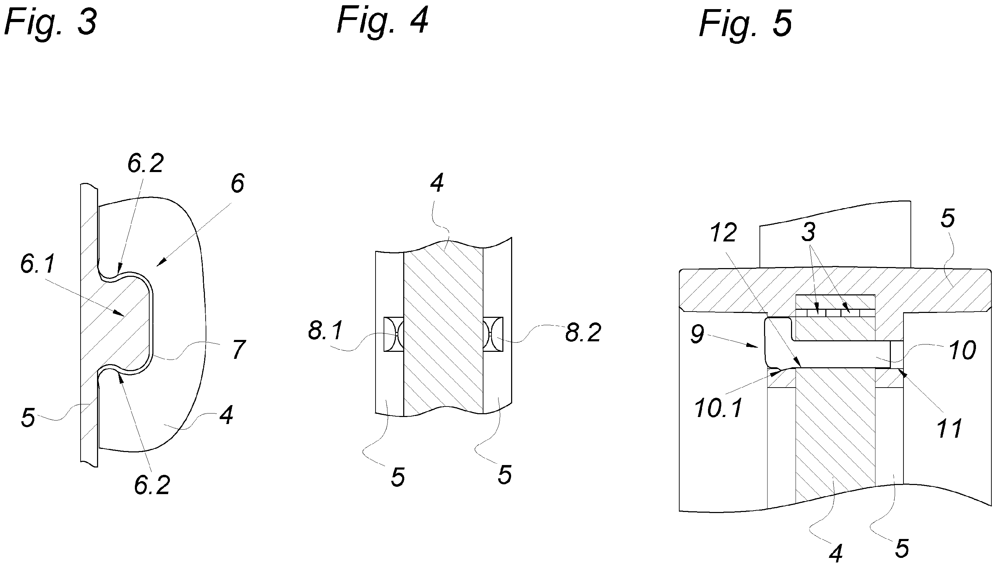

Wie außerdem in den Figuren 1 und 3 zu erkennen, wird der Hinterschnitt 6.2 von einer Aussparung 7 in der lichtleitenden Platte 4 ausbildet. Diese Aussparung 7 verläuft von einer Breitseite 4.5 der lichtleitenden Platte 4 zur gegenüberliegenden zweiten Breitseite 4.6 der lichtleitenden Platte 4 - geht also durch die lichtleitende Platte 4 durch, wie dies in Fig. 2 erkannt werden kann. Durch Letzteres vereinfachen sich auch die Herstellung der ansonsten vergleichsweise starren lichtleitenden Platte 4, da beispielsweise mit einem Trennschritt, eventuell mit Laserschneiden, von einer Breitseite 4.6 der lichtleitenden Platte 4 aus der Hinterschnitt 6.2 erzeugt werden kann.

Maßtoleranzen zwischen den Schnappelementen (Federelement 6.1 und Hinterschnitt 6.2) werden dadurch ausgeglichen, in dem das Federelement 6.1 im Querschnitt eine Pilzform aufweist, wie dies in Fig. 3 erkannt werden kann. Ebenso ist eine Schwalbenschwanzform vorstellbar, was nicht näher dargestellt worden ist.

Die lichtleitende Platte 4 wird im Außenrahmen 5 durch vom Außenrahmen 5 ausgebildete Zentriervorsprünge 8.1, 8.2 zentriert bzw. positioniert, wie dies beispielsweise nach Fig. 4 erkannt werden kann. Zwischen diesen Zentriervorsprüngen 8.1, 8.2 ist die lichtleitende Platte 4 angeordnet, was deren Position gegenüber dem Außenrahmen 5 sichert.

Die Zentriervorsprünge 8.1, 8.2 sichern auch die Schnappverbindung 6 seitlich, dadurch wird die Beweglichkeit der lichtleitenden Platte 4 und damit des Federelements 6.1 im Hinterschnitt 6.2 - also die Beweglichkeit des Federelements 6.1 in Richtung der Breitseite 4.5, 4.6-Anschlag-begrenzt. Dies sichert das Federelement 6.1, insbesondere bei einer die lichtleitende Platte 4 durchdringenden Aussparung gegenüber einem seitlichen Ausschieben und damit einem Öffnen der Schnappverbindung 6.

Wie in Fig. 1 zudem zu erkennen ist, umfasst der Außenrahmen 5 die lichtleitende Platte 4, wobei an drei Schmalseiten 4.2, 4.3, 4.4, nämlich an der zweiten, dritten und vierten Schmalseite 4.2, 4.3, 4.4 der lichtleitenden Platte 4 Schnappverbindungen 6 und Zentriervorsprünge 8.1, 8.2 vorgesehen sind.

Reproduzierbare Außenabmessungen können damit an der Sicherheits- oder Rettungszeichenleuchte 1 eingestellt werden.

Die erste Schmalseite 4.1 der lichtleitenden Platte 4 ist zum Unterschied zu den anderen Schmalseiten 4.2, 4.3, 4.4 mit mehreren Querstiftverbindungen 9 mit dem

Außenrahmen 5 verbunden, wie beispielsweise nach Fig.5 zu erkennen ist. Dies gewährleistet hohe mechanische Stabilität und garantiert auch eine vorgegebene optische Verbindung der Leuchtmittel 3 mit der lichtleitenden Platte 4.

Vorzugsweise ist der Außenrahmen 5 im Bereich der Querstiftverbindung 9 im Querschnitt T-förmig ausgeführt, wie in Fig. 2 zu erkennen. Im Wesentlichen ist der Außenrahmen 5 im Querschnitt rechteckförmig ausgeführt.

Der Stift 10 ist L-förmig ausgebildet und verpresst sich mit einem Vorsprung 10.1 in der Aufnahme 11, nämlich eine Bohrung, die vom Außenrahmen 5 ausgebildet wird. Dadurch entsteht ein Presssitz 12, der die Querstiftverbindung 9 sichert, wobei diese durch die Form des Stifts 10 arretiert ist.

Durch diese mechanisch belastbare Verbindung des Außenrahmens 5 mit der lichtleitenden Platte 4 ist es zudem möglich, an diesen Außenrahmen 5 andere Bauteile der Sicherheits- oder Rettungszeichenleuchte 1 zu befestigen.

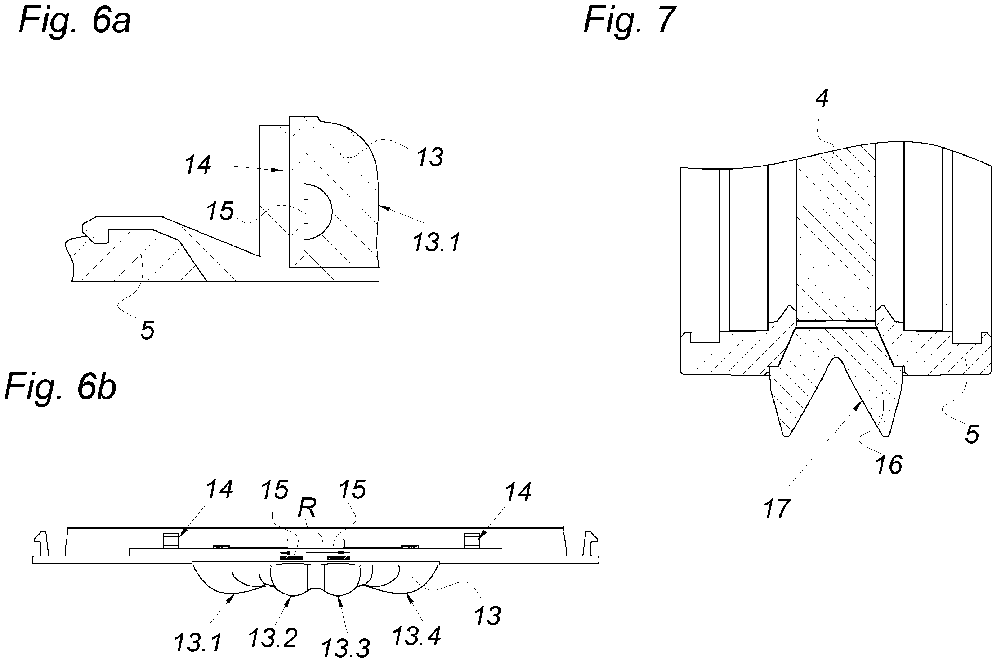

Unter anderem auch einen Linsenkörper 13, der mehrere nebeneinander angeordnete erste optische Linsen 13.1, 13.2, 13.3, 13.4 ausbildet, wie beispielsweise in den Figuren 6a und 6b im Detail zu erkennen. Diese ersten Linsen 13.1, 13.2, 13.3, 13.4 weisen unterschiedliche optische Eigenschaften auf, wodurch verschiedenste Ausleuchtungs-Szenarien abgebildet werden können.

Auch kann der Außenrahmen 5 eine Linearführung 14 tragen, welche Linearführung 14 zwei zweite Leuchtmittel 15, nämlich zwei LEDs, gegenüber dem Linsenkörper 13 beweglich, in beiden Richtungen R verschiebbar lagert. Je nach Lage der zweiten Leuchtmittel 15 zum Linsenkörper 13, können so zwei Linsen der Linsen 13.1, 13.2, 13.3 für eine optische Verbindung ausgewählt werden. Aufgrund verschiedener optischer Eigenschaften der Linsen 13.1, 13.2, 13.3, 13.4 kann in unterschiedlicher Art und Weise die Umgebung der Sicherheits- oder Rettungszeichenleuchte 1 beleuchtet werden.

Zudem trägt der Außenrahmen 5 auch eine zweite w-förmige Linse 16, wie nach Fig. 7 im Detail zu erkennen. Diese zweite Linse 16 ist mit der dritten Stirnseite 4.3 der lichtleitenden Platte 4 optisch verbunden, wodurch Licht auskoppelt wird, was zur Beleuchtung der Umgebung der Sicherheits- oder Rettungszeichenleuchte 1 beiträgt. Diese zweite optische Linse 16 weist im Querschnitt einen w-förmigen Konturverlauf 17 auf.

Insgesamt ergibt sich durch die erfindungsgemäße verschnappte Verbindung zwischen Außenrahmen 5 und lichtleitender Platte 4 eine deutlich vereinfachte Konstruktion, die zu einer robusten und standfesten Sicherheits- oder Rettungszeichenleuchte 1 führt.

Nach Fig. 1 ist die Sicherheits- oder Rettungszeichenleuchte 1 über zwei Montagehalter 18.1 und 18.2 beispielsweise an einem nicht näher dargestellten Gebäudeteil montiert. Die Montagehalter 18.1, 18.2 sind je in einem Eckbereich 5.1, 5.2 des Außenrahmens 5 vorgesehen, und zwar im Bereich der ersten Schmalseite 4.1 der lichtleitenden Platte 4, was eine stabile und standfeste Montage ermöglicht. Die vorzugsweise zylindrischen Montagehalter 18.1 und 18.2 sind über Schraubverbindungen an dem Außenrahmen 5 befestigt, von welchen Schraubverbindungen die Muttern als Befestigungselemente 19.1, 19.2 in Fig. 1 zu erkennen sind.

Damit diese Befestigungselemente 19.1, 19.2 von der Sicherheits- oder Rettungszeichenleuchte 1 aufgenommen werden können, ist die lichtleitende Platte 4 in den beiden Eckbereichen 5.1, 5.2 ausgenommen. Dadurch bilden sich zwischen Außenrahmen 5 und lichtleitender Platte 4 zwei Aufnahmen 20.1, 20.2 aus. Diese Aufnahmen 20.1, 20.2 können auch zur Aufnahme von Seilenden zur Montage der Sicherheits- oder Rettungszeichenleuchte 1 verwendet werden, was nicht näher dargestellt worden ist.

## Patentansprüche

1. Sicherheits- oder Rettungszeichenleuchte (1), insbesondere für eine Notbeleuchtungsanlage, mit einer Anzeige (2), mit mindestens einem ersten Leuchtmittel (3), insbesondere mit mindestens einer LED, mit einer mit dem ersten Leuchtmittel (3) optisch verbundenen, lichtleitenden Platte (4) zum Hinterleuchten der Anzeige (2) und mit einem die Sicherheits- oder Rettungszeichenleuchte (1) außen umfassenden Außenrahmen (5), der mit mindestens einer Schmalseite (4.1, 4.2, 4.3, 4.4) der lichtleitenden Platte (4) verbunden ist, wobei Außenrahmen (5) und lichtleitende Platte (4) über mindestens eine Schnappverbindung (6) miteinander verbunden sind, wofür der Außenrahmen (5) ein elastisches Federelement (6.1) und die lichtleitende Platte (4) an der mindestens einen Schmalseite (4.2, 4.3, 4.4) einen das Federelement (6.1) aufnehmbaren starren Hinterschnitt (6.2) ausbildet.

2. Sicherheits- oder Rettungszeichenleuchte nach Anspruch 1, **dadurch gekennzeichnet, dass** der Hinterschnitt (6.2) von einer Aussparung (7) in der lichtleitenden Platte (4) ausbildet wird, welche Aussparung (7) von einer ersten Breitseite (4.5) der lichtleitende Platte (4) zur gegenüberliegenden zweiten Breitseite (4.6) der lichtleitenden Platte (4) verläuft.

3. Sicherheits- oder Rettungszeichenleuchte nach Anspruch 1 oder 2, **dadurch gekennzeichnet, dass** das Federelement (6.1) im Querschnitt eine Schwalbenschwanzform oder Pilzform aufweist.

4. Sicherheits- oder Rettungszeichenleuchte nach einem der Ansprüche 1 bis 3, **dadurch gekennzeichnet, dass** der Außenrahmen (5) mehrere Zentriervorsprünge (8.1, 8.2) aufweist, zwischen denen die lichtleitende Platte (4) einragt.

5. Sicherheits- oder Rettungszeichenleuchte nach Anspruch 4, **dadurch gekennzeichnet, dass** die Zentriervorsprünge (8.1, 8.2) zum Begrenzen, insbesondere Blockieren, der seitlichen Beweglichkeit der lichtleitenden Platte (4) ausgebildet sind.

6. Sicherheits- oder Rettungszeichenleuchte nach einem der Ansprüche 1 bis 5, **dadurch gekennzeichnet, dass** das erste Leuchtmittel (3) mit einer ersten Schmalseite (4.1) der lichtleitenden Platte (4) optisch verbunden ist.

7. Sicherheits- oder Rettungszeichenleuchte nach einem der Ansprüche 1 bis 6, **dadurch gekennzeichnet, dass** die erste Schmalseite (4.1) der lichtleitenden Platte (4) mit dem Außenrahmen (5) über eine Querstiftverbindung (9) verbunden ist.

8. Sicherheits- oder Rettungszeichenleuchte Anspruch 7, **dadurch gekennzeichnet, dass** ein, insbesondere L-förmige, Stift (10) durch Presssitz (12) in der Querstiftverbindung (9) arretiert ist.

9. Sicherheits- oder Rettungszeichenleuchte nach einem der Ansprüche 1 bis 8, **dadurch gekennzeichnet, dass** der Außenrahmen (5) die lichtleitende Platte (4) an den Schmalseiten (4.1, 4.2, 4.3, 4.4) umfasst.

10. Sicherheits- oder Rettungszeichenleuchte nach einem der Ansprüche 1 bis 9, **dadurch gekennzeichnet, dass** Schnappverbindungen (6) die zweite, dritte und vierte Schmalseite (4.2, 4.3, 4.4) der lichtleitenden Platte (4) mit dem Außenrahmen (5) verbinden.

11. Sicherheits- oder Rettungszeichenleuchte nach einem der Ansprüche 1 bis 10, **dadurch gekennzeichnet, dass** die Sicherheits- oder Rettungszeichenleuchte zur Beleuchtung der Umgebung einen Linsenkörper (13) mit mehreren ersten optischen Linsen (13.1, 13.2, 13.3, 13.4), mindestens ein zweites Leuchtmittel (15), insbesondere mindestens eine LED, das mit dem Linsenkörper (13) optisch verbunden ist, und eine Linearführung (14) aufweist, wobei der Außenrahmen (5) den Linsenkörper (13) trägt und die Linearführung (14) das zweite Leuchtmittel (15) gegenüber dem Linsenkörper (13) beweglich lagert.

12. Sicherheits- oder Rettungszeichenleuchte nach Anspruch 11, **dadurch gekennzeichnet, dass** die Linearführung (14) am Außenrahmen (5) befestigt ist.

13. Sicherheits- oder Rettungszeichenleuchte nach einem der Ansprüche 1 bis 12, **dadurch gekennzeichnet, dass** die lichtleitende Platte (4) eine zweite optische Linse (16) aufweist, welche zweite optische Linse (16) mit der dritten Schmalseite (4.3) der lichtleitenden Platte (4) optisch zum Auskoppeln von Licht verbunden ist.

14. Sicherheits- oder Rettungszeichenleuchte nach Anspruch 13, **dadurch gekennzeichnet, dass** die zweite optische Linse (16) im Querschnitt einen w-förmigen Konturverlauf (17) aufweist.

15. Sicherheits- oder Rettungszeichenleuchte nach einem der Ansprüche 1 bis 14, **dadurch gekennzeichnet, dass** die Sicherheits- oder Rettungszeichenleuchte (1) mindestens einen Montagehalter (18.1, 18.2) aufweist, der am Außenrahmen (5) befestigt ist.

16. Sicherheits- oder Rettungszeichenleuchte nach Anspruch 15, **dadurch gekennzeichnet, dass** der Montagehalter (18.1, 18.2) am Außenrahmen (5) im Bereich der ersten Schmalseite (4.1) der lichtleitenden Platte (4) angeordnet ist.

17. Sicherheits- oder Rettungszeichenleuchte nach Anspruch 15 oder 16, **dadurch gekennzeichnet, dass** zwei Montagehalter (18.1, 18.2) je in einem Eckbereich (5.1, 5.2) des Außenrahmens (5) vorgesehen sind.

18. Sicherheits- oder Rettungszeichenleuchte nach Anspruch 17, **dadurch gekennzeichnet, dass** die lichtleitende Platte (4) in den beiden Eckbereichen (5.1, 5.2) ausgenommen ist, wobei sich zwischen Außenrahmen (5) und lichtleitender Platte (4) Aufnahmen (20.1,20.2) für Befestigungselemente (19.1, 19.2) der Montagehalter (18.1, 18.2) ausbilden.

19. Notbeleuchtungsanlage mit einer Sicherheits- oder Rettungszeichenleuchte nach einem der Ansprüche 1 bis 18.

## Claims

1. Safety or emergency exit sign lamp (1), more particularly for an emergency lighting system, having an indicator (2), having at least one first illuminant (3), more particularly having at least one LED, having a light-conducting plate (4) optically connected to the first illuminant (3) for backlighting the indicator (2), and having an outer frame (5) that externally encompasses the safety or emergency exit sign lamp (1) on the outside, which is connected to at least one narrow side (4.1, 4.2, 4.3, 4.4) of the light-conducting plate (4), wherein the outer frame (5) and the light-conducting plate (4) are connected to one another via at least one snap connection (6), for which the outer frame (5) forms an elastic spring element (6.1) and the light-conducting plate (4) forms, on the at least one narrow side (4.2, 4.3, 4.4), a rigid undercut (6.2) which can receive the spring element (6.1).

2. Safety or emergency exit sign lamp according to claim 1, **characterized in that** the undercut (6.2) is formed by a recess (7) in the light-conducting plate (4), which recess (7) extends from a first broad side (4.5) of the light-conducting plate (4) to the opposite, second broad side (4.6) of the light-conducting plate (4).

3. Safety or emergency exit sign lamp according to claim 1 or 2, **characterized in that** the spring element (6.1) has a dovetailed cross-section or mushroom-shaped cross-section.

4. Safety or emergency exit sign lamp according to one of claims 1 to 3, **characterized in that** the outer frame (5) has a plurality of centering projections (8.1, 8.2), between which the light-conducting plate (4) projects.

5. Safety or emergency exit sign lamp according to claim 4, **characterized in that** the centering projections (8.1, 8.2) are designed to limit, more particularly to block, the lateral mobility of the light-conducting plate (4).

6. Safety or emergency exit sign lamp according to one of claims 1 to 5, **characterized in that** the first illuminant (3) is optically connected to a first narrow side (4.1) of the light-conducting plate (4).

7. Safety or emergency exit sign lamp according to one of claims 1 to 6, **characterized in that** the first narrow side (4.1) of the light-conducting plate (4) is connected to the outer frame (5) via a transverse pin connection (9).

8. Safety or emergency exit sign lamp according to claim 7, **characterized in that** a pin (10), more particularly an L-shaped pin, is locked in the transverse pin connection (9) by a press fit (12).

9. Safety or emergency exit sign lamp according to one of the claims 1 to 8, **characterized in that** the outer frame (5) encloses the light-conducting plate (4) on the narrow sides (4.1, 4.2, 4.3, 4.4).

10. Safety or emergency exit sign lamp according to one of claims 1 to 9, **characterized in that** snap connections (6) connect the second, third and fourth narrow sides (4.2, 4.3, 4.4) of the light-conducting plate (4) to the outer frame (5).

11. Safety or emergency exit sign lamp according to one of claims 1 to 10, **characterized in that** the safety or emergency exit sign lamp has, for the purpose of illuminating the surrounding area, a lens body (13) with a plurality of first optical lenses (13.1, 13.2, 13.3, 13.4), at least one second illuminant (15), more particularly at least one LED, which is optically connected to the lens body (13), and a linear guide (14), wherein the outer frame (5) carries the lens body (13) and the linear guide (14) supports the second illuminant (15) such that it can move with respect to the lens body (13).

12. Safety or emergency exit lamp according to claim 11, **characterized in that** the linear guide (14) is fastened to the outer frame (5).

13. Safety or emergency exit sign lamp according to one of claims 1 to 12, **characterized in that** the light-conducting plate (4) has a second optical lens (16), which second optical lens (16) is optically connected to the third narrow side (4.3) of the light-conducting plate (4) for the purpose of coupling out light.

14. Safety or emergency exit sign lamp according to claim 13, **characterized in that** the second optical lens (16) has a w-shaped contour (17) in cross-section.

15. Safety or emergency exit sign lamp according to one of claims 1 to 14, **characterized in that** the safety or emergency exit sign lamp (1) has at least one mounting holder (18.1, 18.2) which is fastened on the outer frame (5).

16. Safety or emergency exit sign lamp according to claim 15, **characterized in that** the mounting holder (18.1, 18.2) is arranged on the outer frame (5) in the region of the first narrow side (4.1) of the light-conducting plate (4).

17. Safety or emergency exit lamp according to claim 15 or 16, **characterized in that** two mounting holders (18.1, 18.2) are provided in each corner region (5.1, 5.2) of the outer frame (5).

18. Safety or emergency exit lamp according to claim 17, **characterized in that** the light-conducting plate (4) is recessed in the two corner regions (5.1, 5.2), wherein receptacles (20.1, 20.2) for fastening elements (19.1, 19.2) of the mounting holders (18.1, 18.2) are formed between the outer frame (5) and light-conducting plate (4).

19. Emergency lighting system having a safety or emergency exit sign lamp according to one of claims 1 to 18.

## Revendications

1. Luminaire signalétique de sécurité ou de secours (1), en particulier pour une installation d'éclairage de secours, avec un affichage (2), avec au moins une première lampe (3), en particulier avec au moins une DEL, avec une plaque conductrice de lumière (4) en connexion optique avec la première lampe (3) pour l'éclairage par l'arrière de l'affichage (2) et avec un cadre extérieur (5) entourant le luminaire signalétique de sécurité ou de secours (1) par l'extérieur, qui est relié par au moins un petit côté (4.1, 4.2, 4.3, 4.4) à la plaque conductrice de lumière (4), le cadre extérieur (5) et la plaque conductrice de lumière (4) étant reliés l'un à l'autre par au moins un assemblage enclenché (6), ce pour quoi le cadre extérieur (5) forme un élément de ressort élastique (6.1) et la plaque conductrice de lumière (4) forme sur au moins un petit côté (4.2, 4.3, 4.4) une contre-dépouille rigide (6.2) qui reçoit l'élément de ressort (6.1).

2. Luminaire signalétique de sécurité ou de secours selon la revendication 1, **caractérisé en ce que** la contre-dépouille (6.2) est formée par une découpe (7) dans la plaque conductrice de lumière (4), laquelle découpe (7) s'étend d'un premier grand côté (4.5) de la plaque conductrice de lumière (4) au deuxième grand côté (4.6) opposé de la plaque conductrice de lumière (4).

3. Luminaire signalétique de sécurité ou de secours selon la revendication 1 ou 2, **caractérisé en ce que** l'élément de ressort (6.1) a une section en forme de queue d'aronde ou une forme de champignon.

4. Luminaire signalétique de sécurité ou de secours selon l'une des revendications 1 à 3, **caractérisé en ce que** le cadre extérieur (5) comporte plusieurs saillies de centrage (8.1, 8.2) entre lesquelles dépasse la plaque conductrice de lumière (4).

5. Luminaire signalétique de sécurité ou de secours selon la revendication 4, **caractérisé en ce que** les saillies de centrage (8.1, 8.2) sont conformées de façon à limiter, en particulier à bloquer, la mobilité latérale de la plaque conductrice de lumière (4).

6. Luminaire signalétique de sécurité ou de secours selon l'une des revendications 1 à 5, **caractérisé en ce que** la première lampe (3) est connectée optiquement à un premier petit côté (4.1) de la plaque conductrice de lumière (4).

7. Luminaire signalétique de sécurité ou de secours selon l'une des revendications 1 à 6, **caractérisé en ce que** le premier petit côté (4.1) de la plaque conductrice de lumière (4) est assemblé au cadre extérieur (5) par un assemblage à goupille transversale (9).

8. Luminaire signalétique de sécurité ou de secours selon la revendication 7, **caractérisé en ce qu'**une goupille (10), en particulier en forme de L, est bloquée par calage (12) dans l'assemblage à goupille transversale (9).

9. Luminaire signalétique de sécurité ou de secours selon l'une des revendications 1 à 8, **caractérisé en ce que** le cadre extérieur (5) entoure la plaque conductrice de lumière (4) sur les petits côtés (4.1, 4.2, 4.3, 4.4).

10. Luminaire signalétique de sécurité ou de secours selon l'une des revendications 1 à 9, **caractérisé en ce que** des assemblages enclenchés (6) relient les deuxième, troisième et quatrième petits côtés (4.2, 4.3, 4.4) de la plaque conductrice de lumière (4) au cadre extérieur (5).

11. Luminaire signalétique de sécurité ou de secours selon l'une des revendications 1 à 10, **caractérisé en ce qu'**il comporte, pour éclairer son environnement, un bloc de lentilles (13) avec plusieurs premières lentilles optiques (13.1, 13.2, 13.3, 13.4), au moins une deuxième lampe (15), en particulier au moins une DEL connectée optiquement au bloc de lentilles (13), et un guide linéaire (14), le cadre extérieur (5) portant le bloc de lentilles (13) et le guide linéaire (14) supportant la deuxième lampe (15) de façon mobile par rapport au bloc de lentilles (13).

12. Luminaire signalétique de sécurité ou de secours selon la revendication 11, **caractérisé en ce que** le guide linéaire (14) est fixé sur le cadre extérieur (5).

13. Luminaire signalétique de sécurité ou de secours selon l'une des revendications 1 à 12, **caractérisé en ce que** la plaque conductrice de lumière (4) comporte une deuxième lentille optique (16), laquelle deuxième lentille optique (16) est connectée optiquement avec le troisième petit côté (4.3) de la plaque conductrice de lumière (4) pour faire sortir la lumière.

14. Luminaire signalétique de sécurité ou de secours selon la revendication 13, **caractérisé en ce que** la deuxième lentille optique (16) a un contour (17) en forme de w en section.

15. Luminaire signalétique de sécurité ou de secours selon l'une des revendications 1 à 14, **caractérisé en ce que** le luminaire signalétique de sécurité ou de secours (1) comporte au moins une fixation de montage (18.1, 18.2) qui est fixée au cadre extérieur (5).

16. Luminaire signalétique de sécurité ou de secours selon la revendication 15, **caractérisé en ce que** la fixation de montage (18.1, 18.2) est disposée sur le cadre extérieur (5) au niveau du premier petit côté (4.1) de la plaque conductrice de lumière (4).

17. Luminaire signalétique de sécurité ou de secours selon la revendication 15 ou 16, **caractérisé en ce que** deux fixations de montage (18.1, 18.2) sont prévues chacune dans un coin (5.1, 5.2) du cadre extérieur (5).

18. Luminaire signalétique de sécurité ou de secours selon la revendication 17, **caractérisé en ce que** la plaque conductrice de lumière (4) est découpée dans les deux coins (5.1, 5.2), de sorte que des logements (20.1, 20.2) pour des éléments de fixation (19.1, 19.2) de la fixation de montage (18.1, 18.2) sont formés entre le cadre extérieur (5) et la plaque conductrice de lumière (4).

19. Installation d'éclairage de secours avec un luminaire signalétique de sécurité ou de secours selon l'une des revendications 1 à 18.
